# EUROPÄISCHE PATENTSCHRIFT

(11) **EP 3 934 036 B1**
(45) Veröffentlichungstag und Bekanntmachung des Hinweises auf die Patenterteilung: **19.03.2025**
(21) Anmeldenummer: 20183182.3
(22) Anmeldetag: 30.06.2020
(51) Int. Cl.: H02G 3/22, H01B 17/26

(54) **HOCHSPANNUNGSDURCHFÜHRUNG UND ELEKTRISCHE HOCHSPANNUNGSEINRICHTUNG MIT HOCHSPANNUNGSDURCHFÜHRUNG**
HIGH VOLTAGE FEEDTHROUGH AND HIGH VOLTAGE ELECTRICAL DEVICE WITH HIGH-VOLTAGE FEEDTHROUGH
TRAVERSÉE HAUTE TENSION ET DISPOSITIF ÉLECTRIQUE HAUTE TENSION POURVU D'UNE TRAVERSÉE HAUTE TENSION

(43) Veröffentlichungstag der Anmeldung: 05.01.2022
(73) Patentinhaber: HSP Hochspannungsgeräte GmbH, 53842 Troisdorf (DE)
(72) Erfinder: Langens, Achim, 53797 Lohmar (DE)
(74) Vertreter: Betten & Resch

(56) Entgegenhaltungen:
- EP-A1- 0 285 895
- EP-A1- 2 620 958
- EP-A1- 3 229 242
- WO-A1-2019/025023
- DE-A1- 102017 204 935
- DE-A1- 4 303 567
- KR-A- 20180 018 248
- US-A1- 2020 168 370

## Beschreibung

Die Erfindung betrifft eine Hochspannungsdurchführung mit einem Innenleiter, der durch einen Isolierkörper hindurchgeführt ist, einem Gehäuse, das den Isolierkörper zumindest teilweise außen umschließt, sowie mit einem Befestigungsflansch zum Befestigen der Hochspannungsdurchführung an einer Wandung einer Hochspannungseinrichtung. Geeigneterweise ist ein erstes axiales Ende des Innenleiters zum Verbinden mit einem elektrischen Leiter der elektrischen Hochspannungseinrichtung vorgesehen, wobei ein zweites axiales Ende des Innenleiters zum Verbinden mit einer weiteren elektrischen Leitung vorgesehen ist.

Eine Hochspannungsdurchführung dieser Art ist aus der WO 2019/011426 A1 bekannt. Sie hat die Aufgabe, den in einem Betrieb der Hochspannungsdurchführung und der Hochspannungseinrichtung auf einem Hochspannungspotenzial liegenden Innenleiter, von der sich auf Erdpotenzial befindenden Umgebung, darunter auch der Wandung der Hochspannungseinrichtung, zu isolieren.

Im Allgemeinen kann die Wandung dabei eine Wandung eines Transformatorkessels oder auch eine Wandung einer Ventilhalle für einen Stromrichter sein. Die zu isolierende Spannung zwischen dem Innenleiter und der Umgebung kann oberhalb von 500 kV liegen, in manchen Anwendungen auch 800 kV oder mehr betragen. Die zu isolierende Spannung bestimmt mitunter auch die axiale Länge der Hochspannungsdurchführung bzw. des Isolierkörpers sowie dessen Radius. Die Auslegung der Hochspannungsdurchführung beeinflusst dementsprechend auch deren Gewicht.

In einem Fehlerfall der elektrischen Hochspannungseinrichtung oder der Hochspannungsdurchführung selbst kann es zu einer starken Erhitzung der Hochspannungsdurchführung kommen (und damit z.B**.** auch zu einem Brand). Eine solche Erhitzung kann einen unerwünschten, negativen Einfluss insbesondere auch auf die mechanische Stabilität der Hochspannungsdurchführung haben. Bei einem Versagen der Festigkeit kann die Hochspannungsdurchführung von der Wandung, an der sie befestigt ist, abbrechen und weiteren Schaden in der Umgebung der Hochspannungseinrichtung verursachen. Üblicherweise wird eine vorsorgliche Erhöhung der mechanischen Stabilität der Hochspannungsdurchführung durch eine Überauslegung, d.h**.** insbesondere Durchmesservergrößerung des Innenleiters, erreicht. Dies hat jedoch den Nachteil eines weiter erhöhten Gewichtes sowie gesteigerter Kosten der Hochspannungsdurchführung.

Aus der EP 3 229 242 A1 ist eine Hochspannungsdurchführung bekannt, die sich durch ein feuchtigkeitsdichtes Gehäuse auszeichnet, das den Isolierkörper vom Kopfende bis zum Befestigungsflansch umschließt.

KR 20180018248 A offenbart eine Anordnung mit einem Kunststoffrohr, das durch eine Metallwandung hindurchgeführt ist. Die Anordnung umfasst zum Zwecke des Feuerschutzes eine innere und eine äußere Hülse, die das Kunststoffrohr umschließen.

Die Aufgabe der Erfindung ist es, eine artgemäße Hochspannungsdurchführung vorzuschlagen, die möglichst kostengünstig und zuverlässig ist.

Die Aufgabe wird durch eine Hochspannungsdurchführung gemäß Anspruch 1 gelöst. Durch die Schutzeinrichtung kann vorteilhaft verhindert werden, dass die mechanische Konstruktion der Hochspannungsdurchführung durch Erhitzung ihre Festigkeit verliert und dass damit die gesamte Hochspannungsdurchführung keinen festen Verbund mehr darstellt. Zugleich muss die Hochspannungsdurchführung in ihren Abmessungen nicht wesentlich vergrößert werden, was eine wesentliche Gewichts- und Kostenerhöhung zu vermeiden erlaubt.

Die Schirmhaube kann zylinderförmig oder ähnlich sein und mit dem Gehäuse mechanisch verbunden sein. Sie erstreckt sich geeigneterweise axial zwischen dem ersten und dem zweiten Ende der Hochspannungsdurchführung.

Insbesondere dann, wenn das Gehäuse zylinderförmig ist, kann die Schirmhaube zylinder- bzw. rohrförmig und um das Gehäuse konzentrisch angeordnet sein. Eine zylinderförmige Ausführung wird auch dann als solche verstanden, wenn beispielsweise das Rohr oder der Zylinder nicht vollständig ist, sondern, seine Grundgestalt beibehaltend, beispielsweise Schlitze oder Ausnehmungen aufweist, wie z.B. einen Längsschlitz entlang dessen gesamten axialen Länge.

Vorzugsweise ist zwischen dem Gehäuse und der Schirmhaube ein radialer Abstand von 50 mm bis 300 mm, bevorzugt von 100 mm bis 200 mm vorgesehen, so dass ein Zwischenraum zwischen dem Gehäuse und der Schirmhaube ausgebildet ist. Das Gehäuse kann generell beispielsweise aus Aluminium ausgebildet sein bzw. solches umfassen. Mit dem Abstand zwischen dem Gehäuse und der Schirmhaube ist es möglich, die thermische Übertragung zu verlangsamen. Grundsätzlich ist es nämlich nicht unbedingt notwendig, dass der thermische Schutz eine Aufrechterhaltung der mechanischen Stabilität der Hochspannungsdurchführung dauerhaft gewährleistet. Für die meisten Anwendungen kann es ausreichend sein, wenn die Festigkeit der Hochspannungsdurchführung für eine gewisse Zeit bestehen bleibt, bis entsprechende Gegenmaßnahmen, beispielsweise eine Brandlöschung oder andere Art von Fehlerklärung, erfolgreich sind. Der Zwischenraum könnte grundsätzlich gasgefüllt (luftgefüllt) oder gar evakuiert sein. Zur Ausbildung des Zwischenraumes kann die Schirmhaube mittels geeigneter Abstandshalter mit dem Gehäuse verbunden bzw. daran befestigt sein.

Vorzugsweise ist die Schirmhaube aus Stahl, besonders bevorzugt aus Edelstahl, ganz besonders bevorzugt aus einem legierten Edelstahl, wie beispielsweise mit Wolfram (zudem bspw. Molybdän, Vanadium, Kobalt) legierten Edelstahl. Diese Wahl des Materials für die Schirmhaube hat den Vorteil einer besonders guten Hitzebeständigkeit.

Gemäß einer Ausführungsform der Erfindung deckt die Schutzhabe den Befestigungsflansch radial außen vollständig ab. Demgemäß erstreckt sich die Schirmhaube axial derart, dass der Befestigungsflansch außen von der Schirmhaube bedeckt ist. Dies hat insbesondere den Vorteil, dass auch der Befestigungsflansch durch die Schirmhaube thermisch geschützt ist. Radiale Abdeckung muss jedoch nicht bedeuten, dass der Befestigungsflansch durch der Schirmhaube von allen Seiten vollständig umschlossen ist.

Erfindungsgemäß ist die Schirmhaube unter Ausbildung eines Zwischenraumes zwischen der Schirmhaube und dem Gehäuse angeordnet. Der Zwischenraum ist mit einem feuerfesten Material zumindest teilweise gefüllt. Ein Material wird im Rahmen der Erfindung als feuerfest verstanden, wenn dessen mechanische Festigkeit zumindest bei 600°C noch bestehen bleibt. Beispiele für feuerfeste Materialien sind Keramik, Glas, Mineralfasern, Refraktärmetalle sowie Edelmetalle.

Erfindungsgemäß umfasst das feuerfeste Material Magnesiumoxid und/oder Keramik. Diese Stoffe weisen vorteilhafterweise sehr gute elektrische Isoliereigenschaften auf.

Gemäß einer Ausführungsform der Erfindung ist der Isolierkörper mit einem Harz imprägniert. Generell kann die Hochspannungsdurchführung einen Isolierkörper aus harzimprägniertem Papier (RIP = Resin Impregnated Paper) aufweisen. Der Isolierkörper kann dabei einen Kondensatorwickel umfassen. Der Kondensatorwickel umfasst aus einem unter Vakuum mit Epoxidharz imprägniertes Spezialpapier. Zwischen dieses werden während des Wickelvorgangs zweckmäßigerweise leitende Einlagen aus Aluminiumfolie eingebracht. Diese Steuereinlagen dienen zur Steuerung des elektrischen Feldes und sorgen durch ihre gute Leitfähigkeit auch bei schnellen Spannungsänderungen für eine optimale Spannungsverteilung. Eine solche Hochspannungsdurchführung weist besonders gute dielektrische Eigenschaften auf. Auf der anderen Seite ist es im Fall einer solchen Hochspannungsdurchführung besonders wichtig, einen thermischen Schutz für den Isolierkörper bereitzustellen. Hochspannungsdurchführungen dieses Typs können beispielsweise zum direkten Anschluss von Transformatoren an SF6-isolierte gekapselte Hochspannungsschaltanlagen eingerichtet sein.

Gemäß einer Ausführungsform der Erfindung ist die Hochspannungsdurchführung eine Transformatordurchführung. Die Hochspannungsdurchführung dient also zu einem (elektrisch isolierten) Herausführen einer im Inneren des Transformators verlaufenden elektrischen Leitung (Transformatorwicklung) aus dem Transformatorkessel (Transformatorgehäuse). Die elektrische Hochspannungseinrichtung ist dementsprechend ein Hochspannungstransformator und der elektrische Leiter der elektrischen Hochspannungseinrichtung ist eine Transformatorwicklung des Hochspannungstransformators. Die Transformatorwicklungen von Hochspannungstransformatoren werden oftmals mittels eines Isolieröls elektrisch isoliert. Der Transformatorkessel ist dementsprechend mit dem Isolieröl zumindest teilweise gefüllt. Ein solches Isolieröl ist jedoch relativ leicht entzündbar, so dass in einem Fehlerfall des Transformators eine Brandentwicklung möglich ist. Aus diesem Grund ist hierbei ein thermischer Schutz der Hochspannungsdurchführung besonders vorteilhaft.

Die Erfindung betrifft ferner eine elektrische Hochspannungseinrichtung mit einem Hochspannungstransformator, wobei eine Transformatorwicklung des Hochspannungstransformators aus einem Transformatorgehäuse des Hochspannungstransformators mittels einer Hochspannungsdurchführung herausgeführt ist. Dabei umfasst die Hochspannungsdurchführung einem Innenleiter, der durch einen Isolierkörper hindurchgeführt ist und dessen erstes axiales Ende zum Verbinden mit einem elektrischen Leiter einer elektrischen Hochspannungseinrichtung vorgesehen ist und dessen zweites axiales Ende zum Verbinden mit einer weiteren elektrischen Leitung vorgesehen ist, ein Gehäuse, das den Isolierkörper zumindest teilweise außen umschließt, sowie einem Befestigungsflansch zum Befestigen der Hochspannungsdurchführung an einer Wandung der Hochspannungseinrichtung.

Eine solche Hochspannungseinrichtung ist aus der bereits erwähnten WO 2019/011426 A1 bekannt.

Die Aufgabe der Erfindung ist es, eine solche Hochspannungseinrichtung anzugeben, die möglichst kostengünstig und zuverlässig ist.

Die Aufgabe wird bei einer artgemäßen Hochspannungseinrichtung erfindungsgemäß durch eine Schutzeinrichtung für einen thermischen Schutz der Hochspannungsdurchführung gelöst, wobei die Schutzeinrichtung eine Schirmhaube umfasst, die das Gehäuse und/oder den Befestigungsflansch von außen zumindest teilweise umschließt.

Die Vorteile der erfindungsgemäßen Hochspannungseinrichtung ergeben sich insbesondere aus den bereits erörterten Vorteilen, die sich aus der Verwendung der erfindungsgemäßen Hochspannungsdurchführung ergeben.

Gemäß einer Ausführungsform der Erfindung ist der Hochspannungstransformator ein Stromrichtertransformator. Ein Stromrichtertransformator ist Teil einer Stromrichteranlage. Üblicherweise ist ein Stromrichtertransformator in näherer Umgebung einer Ventilhalle, in der Stromrichterventile eines Stromrichters angeordnet sind. Bei einer solchen Anordnung besteht die Gefahr, dass bei Versagen der Festigkeit der Hochspannungsdurchführung die Hochspannungsdurchführung aus ihrer Verankerung am Transformator ausbricht und ein Loch in die Ventilhalle reißt, durch das ein Feuer, das u.U. vom Transformator ausgeht, ungehindert in die Ventilhalle eindringen kann. Aus diesem Grund ist der thermische Schutz der erfindungsgemäßen Hochspannungseinrichtung bei dieser Anwendung besonders vorteilhaft.

Die Erfindung wird nachfolgend anhand von Figuren 1 bis 3 weiter erläutert.
Figur 1 zeigt ein Ausführungsbeispiel einer erfindungsgemäßen Hochspannungseinrichtung in einer schematischen Darstellung;
Figur 2 zeigt ein Ausführungsbeispiel einer erfindungsgemäßen Hochspannungsdurchführung in einer schematischen Darstellung;
Figur 3 zeigt ein weiteres Ausführungsbeispiel einer erfindungsgemäßen Hochspannungsdurchführung in einer schematischen Darstellung.

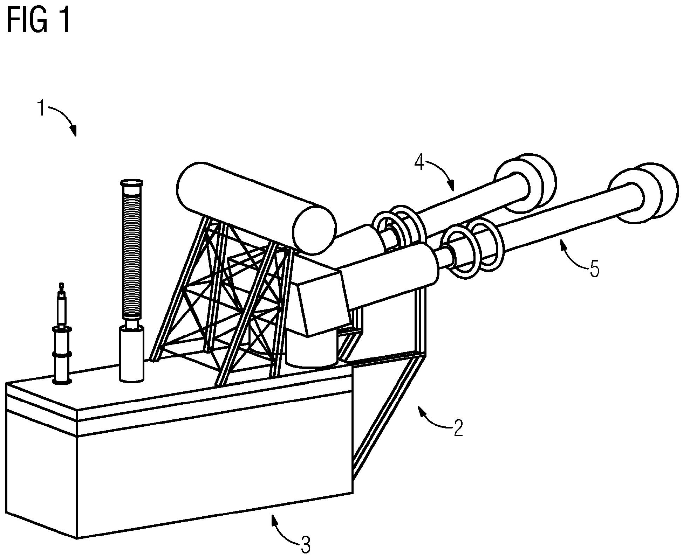

In Figur 1 ist eine Hochspannungseinrichtung 1 dargestellt. Die Hochspannungseinrichtung 1 umfasst einen Hochspannungstransformator 2, der im dargestellten Beispiel ein einphasiger Stromrichtertransformator ist. Der Hochspannungstransformator 2 umfasst einen Transformatorkessel 3, durch dessen Wandung eine Hochspannungsleitung (angeschlossen an eine Transformatorwicklung) mittels einer ersten und einer zweiten Hochspannungsdurchführung 4 bzw. 5 herausgeführt ist.

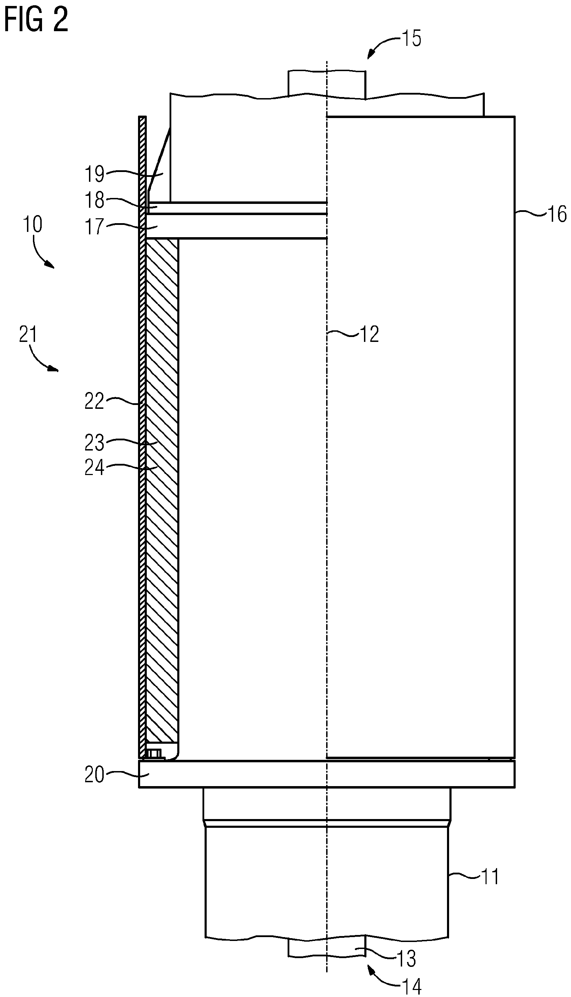

In Figur 2 ist eine Hochspannungsdurchführung 10 dargestellt. Die Hochspannungsdurchführung kann beispielsweise in der Hochspannungseinrichtung 1 der Figur 1 eingesetzt werden. Die Hochspannungsdurchführung 10 umfasst einen Isolierkörper 11, der mit Harz imprägniertes Papier sowie leitende Steuereinlagen umfasst. Durch den Isolierkörper 11 ist entlang einer Längsachse 12 ein Innenleiter 13 hindurchgeführt. Ein erstes axiales Ende 14 des Innenleiters 13 ist zum Verbinden mit einem elektrischen Leiter der Hochspannungseinrichtung vorgesehen. Ein zweites axiales Ende 15 des Innenleiters 13 ist zum Verbinden mit einer weiteren elektrischen Leitung vorgesehen.

Die Hochspannungsdurchführung 10 umfasst ein Gehäuse 16 aus Aluminium, das zylinderförmig um die Symmetrieachse 12 angeordnet ist und den Isolierkörper 11 umschließt. Die Hochspannungsdurchführung 10 weist ferner zwei Verschraubungsringe 17 und 18 sowie eine mechanische Verstärkung 19 mit Verstärkerrippen auf. Ein Befestigungsflansch bzw. Flanschplatte 20 ist zum mechanischen Verbinden der Hochspannungsdurchführung 10 mit einem Gehäuse eines Hochspannungstransformators vorgesehen.

Für einen thermischen Schutz der Hochspannungsdurchführung 10 ist eine Schutzeinrichtung 21 vorgesehen. Die Schutzeinrichtung 21 umfasst eine Schirmhaube 22, die zylinderförmig bzw. rohrförmig ausgebildet ist und konzentrisch zum Gehäuse 16 um den Isolierkörper 11 angeordnet ist. Die Schirmhaube 22 ist aus Edelstahl. Der radiale Abstand zwischen dem Gehäuse 16 und der Schirmhaube 22 beträgt im dargestellten Beispiel 150 mm, so dass ein Zwischenraum 24 entsteht. Der Zwischenraum 24 ist mit einem feuerfesten Material 23 gefüllt, im dargestellten Beispiel Magnesiumoxid. Die Schirmhaube 22 erstreckt sich axial im Wesentlichen zwischen dem ersten Ende 15 des Innenleiters 13 und dem Befestigungsflansch 20, ohne den letzteren jedoch außen zu umschließen.

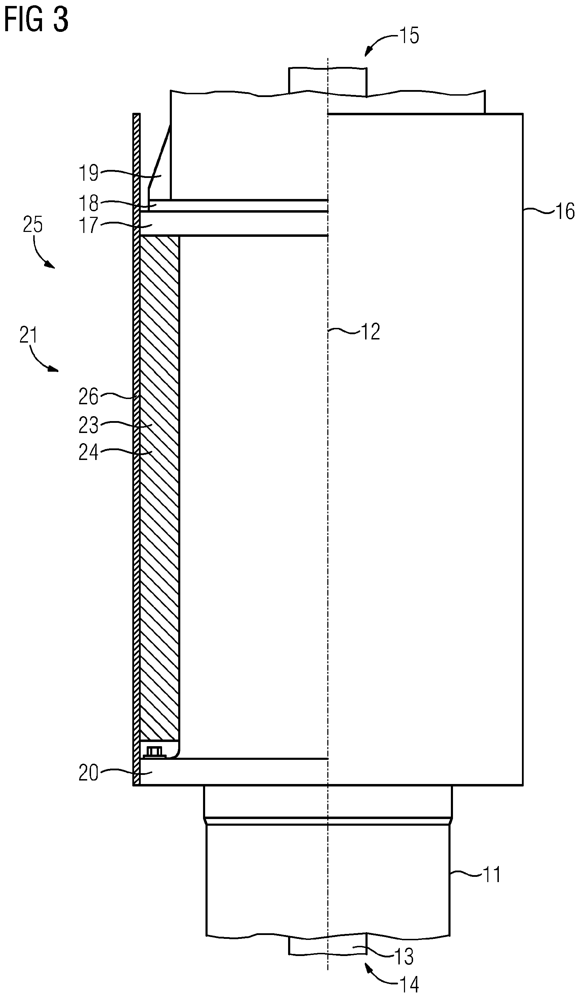

In Figur 3 ist eine Hochspannungsdurchführung 25 dargestellt, die der Hochspannungsdurchführung 10 der Figur 2 weitgehend ähnlich ist. Gleiche und gleichartige Elemente und Bauteile der Hochspannungsdurchführungen 10 und 25 sind jeweils mit gleichen Bezugszeichen versehen. Zur Wahrung der Übersichtlichkeit wird nachfolgend daher lediglich auf die Unterschiede zwischen der Hochspannungsdurchführung 25 und der Hochspannungsdurchführung 10 näher eingegangen.

Die Hochspannungsdurchführung 25 weist eine Schirmhaube 26 auf, die im Unterschied zur Schirmhaube 22 der Figur 1 axial verlängert ist. Die Schirmhaube erstreckt sich axial über den Befestigungsflansch 16, so dass dieser von der Schirmhaube 26 radial abgedeckt bzw. außen umschlossen ist. Dazu ist der Zwischenraum 24 vergrößert, dessen radiale Breite beträgt im dargestellten Beispiel 155 mm. Auf diese Weise kann auch für den Befestigungsflansch 20 ein wirksamer thermischer Schutz bereitgestellt werden.

## Patentansprüche

1. Hochspannungsdurchführung (10) mit
- einem Innenleiter (13), der durch einen Isolierkörper (11) hindurchgeführt ist,
- einem Gehäuse (16), das den Isolierkörper (11) zumindest teilweise außen umschließt,
- einem Befestigungsflansch (20) zum Befestigen der Hochspannungsdurchführung (10) an einer Wandung einer Hochspannungseinrichtung,
**gekennzeichnet durch**
eine Schutzeinrichtung (21) für einen thermischen Schutz der Hochspannungsdurchführung (10), wobei die Schutzeinrichtung (21) eine Schirmhaube (22) umfasst, die das Gehäuse (16) und/oder den Befestigungsflansch (20) von außen zumindest teilweise umschließt, wobei die Schirmhaube (22) unter Ausbildung eines Zwischenraumes (24) zwischen der Schirmhaube (22) und dem Gehäuse (16) angeordnet ist, wobei der Zwischenraum (24) mit einem feuerfesten Material (23) zumindest teilweise gefüllt ist, das Magnesiumoxid und/oder Keramik umfasst.

2. Hochspannungsdurchführung (10) nach Anspruch 1, wobei die Schirmhaube (21) rohrförmig und um das Gehäuse (16) konzentrisch angeordnet ist.

3. Hochspannungsdurchführung (10) nach Anspruch 2, wobei ein radialer Abstand zwischen dem Gehäuse (16) und der Schirmhaube (22) von 50 mm bis 300 mm, bevorzugt von 100 mm bis 200 mm vorgesehen ist, so dass ein Zwischenraum (24) zwischen dem Gehäuse (16) und der Schirmhaube (22) ausgebildet ist.

4. Hochspannungsdurchführung (10) nach einem der vorangehenden Ansprüche, wobei die Schirmhaube (22) aus Stahl, vorzugsweise Edelstahl ist.

5. Hochspannungsdurchführung (10) nach einem der vorangehenden Ansprüche, wobei die Schirmhaube (22) den Befestigungsflansch (20) radial außen vollständig abdeckt.

6. Hochspannungsdurchführung (10) nach einem der vorangehenden Ansprüche, wobei der Isolierkörper (11) mit einem Harz imprägniert ist.

7. Hochspannungsdurchführung (10) nach einem der vorangehenden Ansprüche, wobei die Hochspannungsdurchführung (10) eine Transformatordurchführung ist, die dazu eingerichtet ist, eine Transformatorwicklung eines Hochspannungstransformators aus dessen Transformatorgehäuse isoliert herauszuführen.

8. Elektrische Hochspannungseinrichtung (1) mit einem Hochspannungstransformator (2), wobei eine Transformatorwicklung des Hochspannungstransformators (2) aus einem Transformatorgehäuse (3) des Hochspannungstransformators (2) mittels einer Hochspannungsdurchführung (4,5) nach einem der vorangehenden Ansprüche herausgeführt ist.

9. Hochspannungseinrichtung (1) nach Anspruch 8, wobei der Hochspannungstransformator (2) ein Stromrichtertransformator ist.

## Claims

1. A high-voltage feedthrough (10) having
- an inner conductor (13) which is fed through an insulating
body (11),
- a housing (16) which at least partially encloses the
insulating body (11) on the outside,
- a fixing flange (20) for fixing the high-voltage
feedthrough (10) to a wall of a high-voltage device,
**characterized by**
a protective device (21) for a thermal protection of the high-voltage feedthrough (10), wherein the protective device (21) comprises a shield cover (22) which at least partially encloses the housing (16) and/or the fixing flange (20) from the outside, wherein the shield cover (22) is arranged to form an intermediate space (24) between the shield cover (22) and the housing(16), wherein the intermediate space (24) is at least partially filled with a fireproof material (23) which comprises magnesium oxide and/or ceramic.

2. The high-voltage feedthrough (10) as claimed in claim 1, wherein the shield cover (21) is tubular in shape and is arranged concentrically around the housing (16).

3. The high-voltage feedthrough (10) as claimed in claim 2,
wherein a radial distance of 50 mm to 300 mm, preferably 100 mm to 200 mm, is provided between the housing (16) and the shield cover (22), so that an intermediate space (24) is formed between the housing (16) and the shield cover (22).

4. The high-voltage feedthrough (10) as claimed in one of the preceding claims, wherein the shield cover (22) is made of steel, preferably stainless steel.

5. The high-voltage feedthrough (10) as claimed in one of the preceding claims, wherein the shield cover (22) completely covers the fixing flange (20) on the outside in a radial manner.

6. The high-voltage feedthrough (10) as claimed in one of the preceding claims, wherein the insulating body (11) is impregnated with resin.

7. The high-voltage feedthrough (10) as claimed in one of the preceding claims, wherein the high-voltage feedthrough (10) is a transformer feedthrough which is set up to feed a transformer winding of a high-voltage transformer out of its transformer housing in an insulated manner.

8. An electrical high-voltage device (1) having a high-voltage transformer (2), wherein a transformer winding of the high-voltage transformer (2) is fed out of a transformer housing (3) of the high-voltage transformer (2) by means of a high-voltage feedthrough (4, 5) as claimed in one of the preceding claims.

9. The high-voltage device (1) as claimed in claim 8, wherein the high-voltage transformer (2) is a power converter transformer.

## Revendications

1. Traversée haute tension (10) comprenant
- un conducteur intérieur (13) qui traverse un corps isolant (11),
- un boîtier (16) qui entoure au moins partiellement le corps isolant (11) à l'extérieur,
- une bride de fixation (20) pour fixer la traversée haute tension (10) à une paroi d'une installation haute tension,
**caractérisée par**
un dispositif de protection (21) pour une protection thermique de la traversée haute tension (10), le dispositif de protection (21) comprenant un capot de protection (22) qui entoure au moins partiellement l'extérieur le boîtier (16) et/ou la bride de fixation (20), le capot de protection (22) étant agencé de façon à former un espace intermédiaire (24) entre le capot de protection (22) et le boîtier (16), l'espace intermédiaire (24) étant au moins partiellement rempli d'un matériau résistant au feu (23) qui comprend de l'oxyde de magnésium et/ou de la céramique.

2. Traversée haute tension (10) selon la revendication 1, dans laquelle le capot de protection (21) est tubulaire et est agencé de manière concentrique autour du boîtier (16).

3. Traversée haute tension (10) selon la revendication 2, dans laquelle il est prévu une distance radiale entre le boîtier (16) et le capot de protection (22) de 50 mm à 300 mm, de préférence de 100 mm à 200 mm, de sorte qu'un espace intermédiaire (24) est formé entre le boîtier (16) et le capot de protection (22).

4. Traversée haute tension (10) selon l'une des revendications précédentes, dans laquelle le capot de protection (22) est en acier, de préférence en acier inoxydable.

5. Traversée haute tension (10) selon l'une des revendications précédentes, dans laquelle le capot de protection (22) recouvre complètement la bride de fixation (20) radialement à l'extérieur.

6. Traversée haute tension (10) selon l'une des revendications précédentes, dans laquelle le corps isolant (11) est imprégné d'une résine.

7. Traversée haute tension (10) selon l'une des revendications précédentes, la traversée haute tension (10) étant une traversée de transformateur agencée pour faire sortir de manière isolée un enroulement de transformateur d'un transformateur haute tension de son boîtier de transformateur.

8. Dispositif électrique haute tension (1) avec un transformateur haute tension (2), un enroulement de transformateur du transformateur haute tension (2) étant sorti d'un boîtier de transformateur (3) du transformateur haute tension (2) au moyen d'une traversée haute tension (4, 5) selon l'une des revendications précédentes.

9. Dispositif haute tension (1) selon la revendication 8, dans lequel le transformateur haute tension (2) est un transformateur convertisseur.
